# EUROPEAN PATENT SPECIFICATION

(11) **EP 0 932 929 B1**
(45) Date of publication and mention of the grant of the patent: **14.08.2002**
(21) Application number: 97944921.2
(22) Date of filing: 17.10.1997
(51) Int. Cl.: H02M 7/217, H02M 3/335

(54) **ACTIVE RECTIFIER CIRCUIT**
AKTIVE GLEICHRICHTERSCHALTUNG
CIRCUIT REDRESSEUR ACTIF

(30) Priority: 18.10.1996 FI 964184
(43) Date of publication of application: 04.08.1999
(73) Proprietor: Oy Lexel Finland AB, 02200 Espoo (FI)
(72) Inventor: SAIRANEN, Martti, FIN-01800 Klaukkala (FI); SALONEN, Olli, FIN-02230 Espoo (FI)
(74) Representative: Levlin, Jan Markus
(86) International application number: FI9700632
(87) International publication number: WO9818198

(56) References cited:
- DE-A- 3 422 777
- US-A- 5 179 512
- FISHER R A ET AL: "PERFORMANCE OF LOW LOSS SYNCHRONOUS RECTIFIERS IN A SERIES-PARALLEL RESONANT DC-DC CONVERTER" PROCEEDINGS OF THE ANNUAL APPLIED POWER ELECTRONICS CONFERENCE AND EXPOSITION. (APEC), BALTIMORE, MAR. 13 - 17, 1989, no. 1989, 13 March 1989, INSTITUTE OF ELECTRICAL AND ELECTRONICS ENGINEERS, pages 240-246, XP000044262

## Description

The invention relates to power sources, according to the preambe of claim 1. The invention relates more particularly to rectifier circuits realised with MOSFET-transistors.

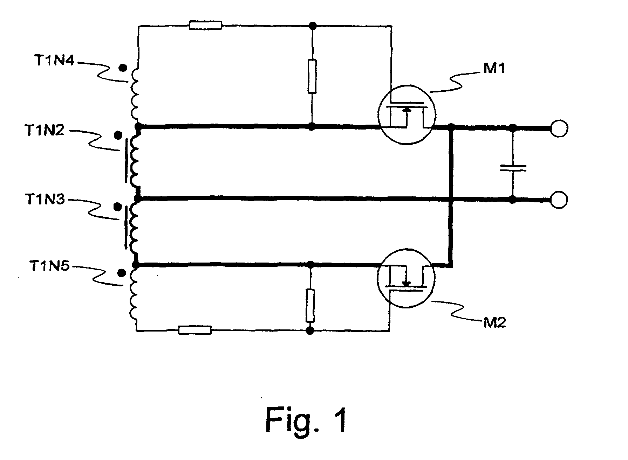

Figure 1 illustrates a synchronous rectifier circuit according to the prior art. The voltage to be rectified is produced with the secondary windings T1N2 and T1N3 of a mains transformer T1, and with the windings T1N4 and T1N5 the control voltages for the gates of the MOSFET-transistors. When the voltage of the winding T1N4 effective on the gate of the transistor M1 and the voltage of the winding T1N2 turn to positive, M1 begins to conduct. Current flows first via the internal diode of the transistor M1, until the control voltage has risen above the gate threshold voltage, whereupon the transistor channel begins to conduct. The voltage loss created in the diode during this period causes power loss, and as a result the transistor is heated. Said period also is relatively long, because the mains voltage frequency is low, and hence the rate of voltage rise on the switching transistor gates is low. The circuit of figure 1 functions as such with low power areas, but with power sources having a higher power than 200 W, the MOSFET:s used in such circuits are heated too much.

The losses created in MOSFET-transistors can be reduced by speeding up the control rate, i.e. the rising speed of gate voltage. An increase in the number of turns of the windings T1N4 and T1N5, i.e. an increase in the alternating voltage generated by the windings, would increase the rising speed of the voltage, but the use this method is very limited owing to the low maximum rating of the voltage between the MOSFET power transistor gate and source. Typically the maximum rating of the MOSFET power transistors is a voltage of the order of 20 V between gate and source.

The most advantageous form of a control signal would be a square wave generated for instance by a digital oscillator. With this type of control, the losses of a MOSFET remains very small, because then the gate voltage rises so rapidly above the gate threshold voltage, that there is no time for power losses to be created. In a circuit according to figure 1, such a separate control circuit is very troublesome to realise, because the transistor sources are in an alternating potential, and this square-wave-formed control voltage should be created exactly between the source and the gate.

Patent US 5179512 and article Fisher et al "Performance of low loss synchronous rectifiers in a series-parallel resonant DC-DC converter" in Proceedings of the annual applied power electronics conference and exposition (APEC), Baltimore, Mar. 13 - 17, 1989, no. 1989, 13 March 1989, Institute of electrical and electronics engineers, pages 240 - 246 show different types of structures using sense windings in the main transformer. These structures correspond to the basic structure illustrated in figure 1. Document DE 34 22 777 A shows a power supply structure using control transformers to optimise the functioning of the circuitry.

It is an object of the invention to realise a low-loss rectifier circuit which is heated remarkably less than in prior art systems. Another object of the invention is to realise a simple MOSFET rectifier circuit, whereby a fast gate control of the switch transistors is obtained.

These objects are achieved by changing the place of the secondary windings and the switching transistors. Thus the MOSFET source is no more in a floating potential, and consequently the gate control can be realised without the auxiliary windings T1N4 and T1N5 located in the secondary part of the main transformer T1.

The power source comprising a mains transformer, said main transformer including a first and second secondary winding, and the power source further comprising two switching transistors for rectifying the current of said secondary windings according to the invention is characterised in that the power source further comprises
- a first control transformer and a second control transformer, whereby
- a first winding of said first control transformer is connected in between the drain of said first switching transistor and the other end of said first secondary winding,
- a first winding of said second control transformer is connected in between the drain of said second switching transistor and the other end of said second secondary winding;
- a second winding of said first control transformer is connected to the first switching transistor control circuit, and
- a second winding of said second control transformer is connected to the second switching transistor control circuit;
- a third winding of said first control transformer is connected between the other end of said second secondary winding and the drain of said second switching transistor, and
- a third winding of said second control transformer is connected between the other end of said first secondary winding and the drain of said first switching transistor.

The dependent claims describe further advantageous embodiments of the invention.

The invention is explained in more detail below, with reference to a few preferred embodiments described by way of example, and to the appended drawings where
- figure 1: illustrates a MOSFET rectifier circuit according to the prior art,
- figure 2: illustrates a preferred embodiment according to the invention,
- figure 3: illustrates another preferred embodiment according to the invention,
- figure 4: illustrates a gate control circuit of a MOSFET, suited for the system of figure 2, and
- figure 5: illustrates a third preferred embodiment according to the invention.

Like numbers or symbols for like parts are used in the drawings.

The symbol T*x* signifies a transformer or toroid *x*, and the symbol T*x*N*y*, where *x* and *y* are small integrals, signifies the winding *y* of said transformer or toroid *x*.

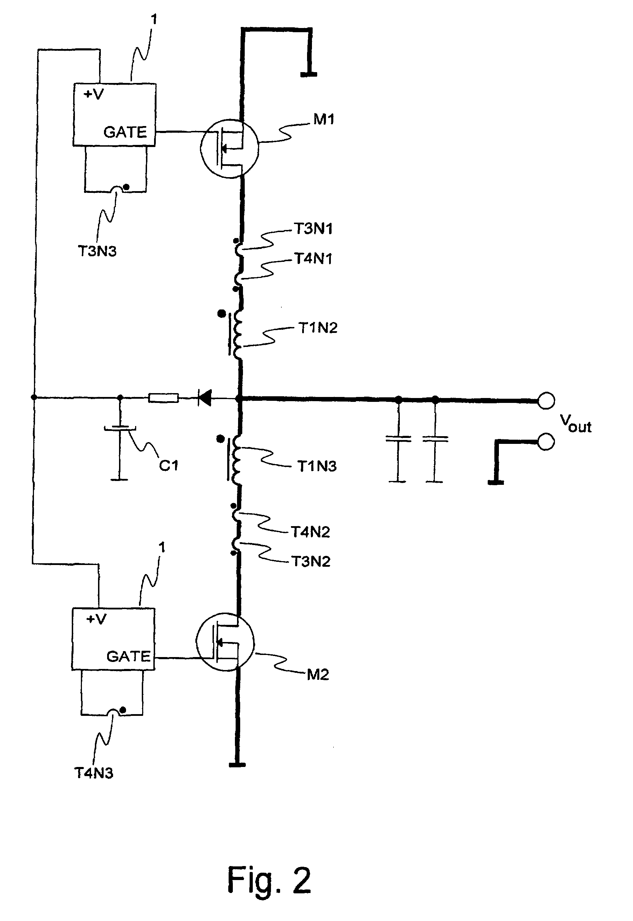

Figure 2 illustrates a preferred embodiment according to the invention. In this embodiment, the sources of both MOSFET-transistors are coupled to ground potential, so that there can be realised a simple gate control circuit resulting in rapid control.

The operation of the preferred embodiment illustrated in figure 2 is based on the fact that by means of small transformers T3 and T4, there is formed a control signal of the current generated by the main transformer onto the gate control circuit 1. When the end of the winding T1N2 that is located on the voltage source outlet side is more positive than the other end of said winding, the current passing through the winding T1N2 renders the MOSFET M1 to conductive mode, by means of the windings T3N1 and T3N3 of the toroid T3, and simultaneously it renders the MOSFET M2 to non-conductive mode by means of the windings T4N1 and T4N3 of the toroid T4. When the end of the winding T1N3 that is located on the voltage source outlet side becomes umore positive than the other end of said winding, the current passing through the winding T1N3 renders the transistor M2 to conductive mode by means of the windings T4N2 and T4N3 of the toroid T4, and the transistor M1 to non-conductive mode by means of the windings T3N2 and T3N3 of the toroid T3.

The employed transformers T3 and T4 can advantageously comprise a small toroid, through which the wire coming out of the secondary winding of the mains transformer is taken, so that there is only one turn in the primary winding of the transformer T3, T4.

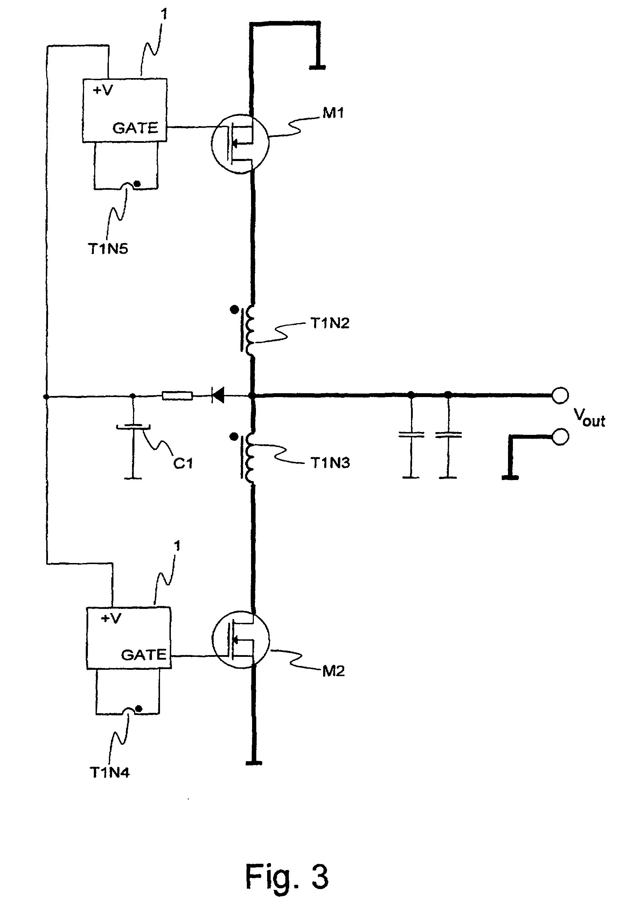

According to another preferred embodiment of the invention, the control signal is not obtained with separate control transformers T3, T4, but the control signal is obtained from the third and fourth secondary windings of the mains transformer, as is illustrated in figure 3. Now the windings T1N4 and T1N5 of the mains transformer are coupled to the control circuits 1 of the MOSFET-transistors.

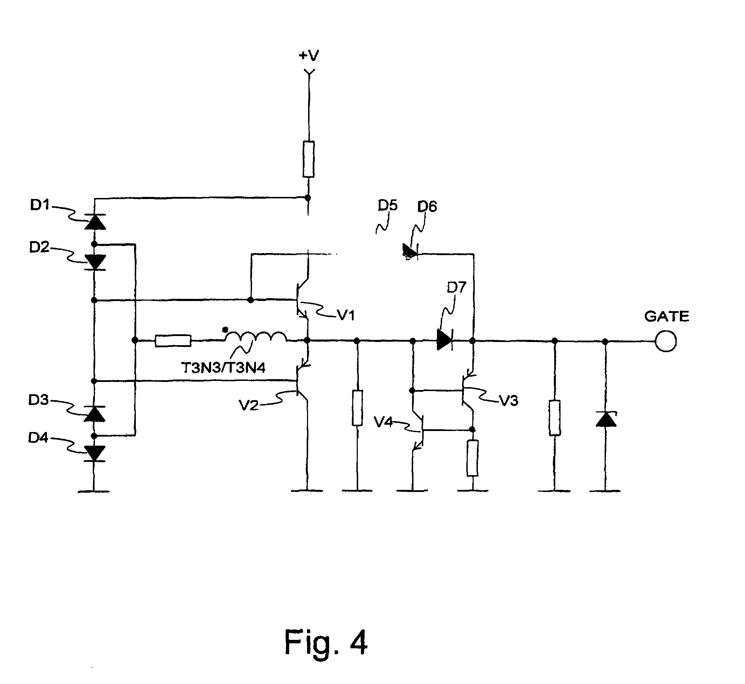

An advantageous arrangement of the gate control circuit 1 is illustrated in figure 4. This type of control circuit can advantageously be used together with the preferred embodiment illustrated in figure 2. The control circuit is realised with two complementary bipolar transistors V1 and V2, which are connected as emitter followers. When the point-marked end of the winding T3N3/T4N3 is more positive than the emitter-connected end of the transistors V1 and V2, the transistor V1 is rendered to conductive mode, so that to the outlet of the control circuit and to the gate of the MOSFET M1, M2, there begins to flow current, whereupon the MOSFET M1, M2 is switched to conductive mode. When the emitter-connected end of the transistors V1 and V2 of the winding T3N3/T4N3 is the more positive, the transistor V2 is rendered to conductive mode, in which case the gate charge of the MOSFET M1, M2 begins to be discharged. At the same moment, the thyristor coupling formed by the transistors V3 and V4 is triggered to conductive mode, thus remarkably speeding up the discharge of the gate charge of the MOSFET and its switching to non-conductive mode.

The diodes D1 - D7 serve as saturation prevention diodes of the transistors V1 and V2. When V1 is switched to conductive mode, its collector is in a higher potential - for the magnitude of two diode threshold voltages - than its base when V1 is not saturated. When the voltage effective in relation to the transistor V1 changes polarity, V1 is rapidly rendered to non-conductive mode. Saturation prevention diodes reduce the transistor storage time, which forms the longest delay when switching a transistor from conductive mode to non-conductive mode.

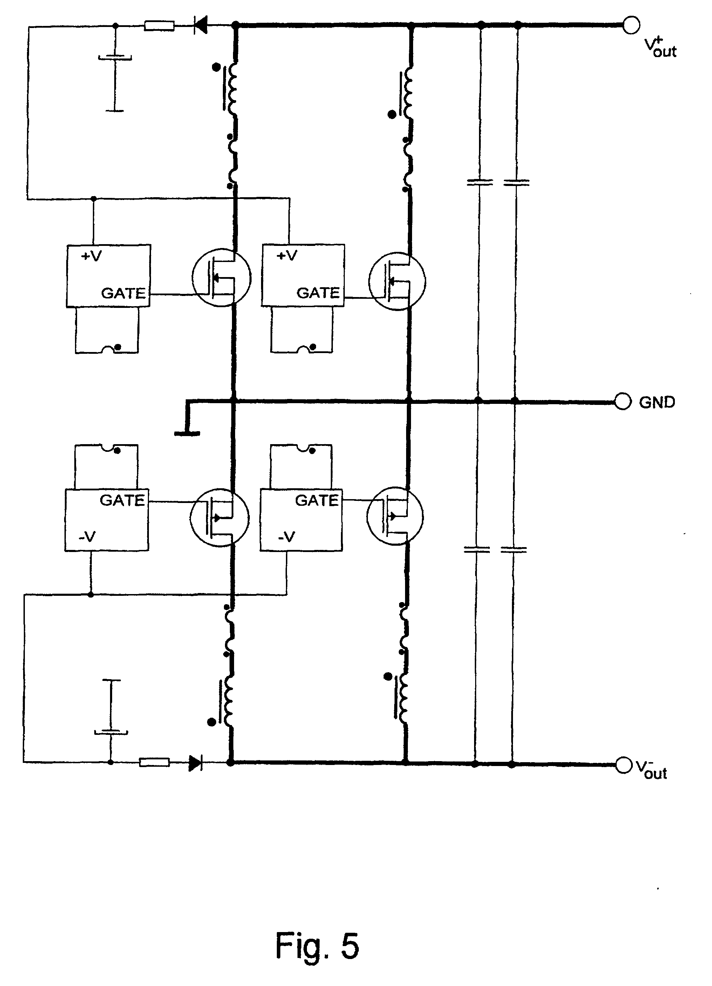

Figure 5 illustrates a third preferred embodiment of the invention. By applying the arrangement according to the invention, it is also possible to realise a double voltage source, the negative outlet voltage whereof can be obtained by means of a circuit illustrated in figure 2; however, the polarity of the voltages is opposite to said figure 2, and instead of *n*-type MOSFET-transistors, there are used *p*-type MOSFET-transistors.

In this specification, we have described various preferred embodiments of the invention by means of MOSFET-transistors, by way of example. However, for a man skilled in the art it is obvious that in the power source according to the invention, other types of known switching transistors can also be employed. In the appended claims, the terms source, drain and gate signify functionally corresponding members of the switching transistor in question in each particular case.

By using the current-controlled active rectification according to the invention, there are achieved extremely low power losses even with high power outputs, because with the gate control circuit illustrated in figure 4, the discharging of the gate charge takes place very rapidly, and consequently the switching and cutting-off times of the MOSFET-transistors are rendered very short. The circuit losses are affected mainly by the resistive losses of the channel resistance of the employed MOSFET-transistors.

## Claims

1. A power source comprising a mains transformer (T1), said mains transformer including a first (T1N2) and second (T1N3) secondary winding, and the power source further comprising two switching transistors (M1,M2) for rectifying the current of said secondary windings, and in which power source
- the sources of said switching transistors are connected to fixed potential,
- the first end of said first secondary winding (T1N2) is connected to the first outlet of the power source,
- the source of the first switching transistor (M1) is connected to the second outlet of the power source, and
- in between the other end of said first secondary winding and the drain of the first switching transistor, there is connected at least a wire; and that
- the first end of said second secondary winding (T1N3) is connected to the first outlet of the power source,
- the source of the second switching transistor (M2) is connected to the second outlet of the power source, and
- in between the other end of said secondary winding and the drain of the second switching transistor, there is connected at least a wire;
and which power source further has
- a first switching transistor control circuit (1) which is connected to the gate of the first switching transistor,
- a second switching transistor control circuit (1) which is connected to the gate of the second switching transistor,
**characterised in that**
the power source further comprises
- a first control transformer (T3) and a second control transformer (T4), whereby
- a first winding (T3N1) of said first control transformer (T3) is connected in between the drain of said first switching transistor (M1) and the other end of said first secondary winding (T1N2),
- a first winding (T4N2) of said second control transformer is connected in between the drain of said second switching transistor (M2) and the other end of said second secondary winding (T1N3);
- a second winding (T3N3) of said first control transformer (T3) is connected to the first switching transistor control circuit (1), and
- a second winding (T4N3) of said second control transformer (T4) is connected to the second switching transistor control circuit (1);
- a third winding (T3N2) of said first control transformer is connected between the other end of said second secondary winding (T1N3) and the drain of said second switching transistor (M2), and
- a third winding (T4N1) of said second control transformer (T4) is connected between the other end of said first secondary winding (T1N2) and the drain of said first switching transistor (M1).

2. The power source of claim 1, **characterised in that** said first outlet of the power source is the positive outlet of the power source, that said second outlet of the power source is the outlet of the ground potential of the power source and that said switching transistors (M1,M2) are n-type switching transistors (M1,M2).

3. The power source of claim 1, **characterised in that** said first outlet of the power source is the negative outlet of the power source, that said second outlet of the power source is the outlet of the ground potential of the power source and that said switching transistors (M1,M2) are p-type switching transistors (M1,M2).

4. The power source of claim 1, **characterised in that** said switching transistor (M1,M2) is a MOSFET.

## Patentansprüche

1. Eine Stromquelle, enthaltend einen Netztransformator (T1), welcher Netztransformator eine erste (T1N2) und zweite (T13) Sekundärwicklung enthält und die Stromquelle weiterhin zwei Schalttransistoren (M1, M2) enthält, um den Strom der Sekundärwicklungen gleichzurichten, und in welcher Stromquelle
- die Sources der Schalttransistoren mit einem festgelegten Potential verbunden sind,
- das erste Ende der ersten Sekundärwicklung (T1N2) mit dem ersten Ausgang der Stromquelle verbunden ist,
- die Source des ersten Schalttransistors (M1) mit dem zweiten Ausgang der Stromquelle verbunden ist, und
- zwischen dem anderen Ende der ersten Sekundärwicklung und der Drain des ersten Schalttransistors wenigstens ein Kabel angeschlossen ist; und dass
- das erste Ende der zweiten Sekundärwicklung (T1N3) mit dem ersten Ausgang der Stromquelle verbunden ist,
- die Source des zweiten Schalttransistors (M2) mit dem zweiten Ausgang der Stromquelle verbunden ist, und
- zwischen dem anderen Ende der Sekundärwicklung und der Drain des zweiten Schalttransistors ist wenigstens ein Kabel angeschlossen ist;
und welche Stromquelle weiterhin folgende Bestandteile aufweist:
- eine erste Schalttransistorsteuerschaltung (1), die mit dem Gate des ersten Schalttransistors verbunden ist,
- eine zweite Schalttransistorsteuerschaltung (1), die mit dem Gate des zweiten Schalttransistors verbunden ist,
**dadurch gekennzeichnet, dass** die Stromquelle weiterhin umfasst
- einen ersten Steuertransformator (T3) und einen zweiten Steuertransformator (T4), wobei
- eine erste Wicklung (T3N1) des ersten Steuertransformators (T3) angeschlossen ist zwischen der Drain des ersten Schalttransistors (M1) und dem andere Ende der ersten Sekundärwicklung (T1N2),
- eine erste Wicklung (T4N2) des zweiten Steuertransformators angeschlossen ist zwischen der Drain des zweiten Schalttransistors (M2) und dem anderen Ende der zweiten Sekundärwicklung (T1N3);
- eine zweite Wicklung (T3N3) des ersten Steuertransformators (T3) mit der ersten Schalttransistorsteuerschaltung (1) verbunden ist, und
- eine zweite Wicklung (T4N3) des zweiten Steuertransformators (T4) mit der zweiten Schalttransistorsteuerschaltung (1) verbunden ist;
- eine dritte Wicklung (T3N2) des ersten Steuertransformators angeschlossen ist zwischen dem anderen Ende der zweiten Sekundärwicklung (T1N3) und der Drain des zweiten Schalttranssistors (M2), und
- eine dritte Wicklung (T4N1) des zweiten Steuertransformators (T4) angeschlossen ist zwischen den anderen Ende der ersten Sekundärwicklung (T1N2) und der Drain des ersten Schalttransistors (M1).

2. Stromquelle nach Anspruch 1,
**dadurch gekennzeichnet, dass** der erste Ausgang der Stromquelle der positive Ausgang der Stromquelle ist, dass der zweite Ausgang der Stromquelle der auf Erdpotential der Stromquelle gelegte Ausgang ist und dass die Schalttransistoren (M1, M2)Schalttransistoren (M1, M2) des n-Typs sind.

3. Stromquelle nach Anspruch 1,
**dadurch gekennzeichnet, dass** der erste Ausgang der Stromquelle der negative Ausgang der Stromquelle ist, dass der zweite Ausgang der Stromquelle der auf Erdpotential liegende Ausgang der Stromquelle ist und dass die Schalttransistoren (M1, M2) Schalttransistoren (M1, M2) des p-Typs sind.

4. Stromquelle nach Anspruch 1,
**dadurch gekennzeichnet, dass** der Schalttransistor (M1, M2) ein MOSFET ist.

## Revendications

1. Source de puissance comportant un transformateur principal (T1), ledit transformateur principal comportant un premier enroulement secondaire (T1N2) et un second enroulement secondaire (T1N3), et la source de puissance comportant de plus deux transistors de commutation (M1, M2) pour redresser le courant desdits enroulements secondaires, source de puissance dans laquelle
- les sources desdits transistors de commutation sont connectées à un potentiel fixe,
- la première extrémité dudit premier enroulement secondaire (T1N2) est connectée à la première sortie de la source de puissance,
- la source du premier transistor de commutation (M1) est connectée à la seconde sortie de la source de puissance, et
- entre l'autre extrémité dudit premier enroulement secondaire et le drain du premier transistor de commutation, est connecté au moins un fil, et
- la première extrémité dudit second enroulement secondaire (T1N3) est connectée à la première sortie de la source de puissance,
- la source du second transistor de commutation (M2) est connectée à la seconde sortie de la source de puissance, et
- entre l'autre extrémité dudit enroulement secondaire et le drain du second transistor de commutation, est connecté au moins un fil,
et laquelle source de puissance a de plus
- un circuit de commande de premier transistor de commutation (1) qui est connecté à la grille du premier transistor de commutation,
- un circuit de commande de second transistor de commutation (1) qui est connecté à la grille du second transistor de commutation,
**caractérisée en ce que**
la source de puissance comporte de plus
- un premier transformateur de commande (T3) et un second transformateur de commande (T4), de sorte que
- un premier enroulement (T3N1) dudit premier transformateur de commande (T3) est connecté entre le drain dudit premier transistor de commutation (M1) et l'autre extrémité dudit premier enroulement secondaire (T1N2),
- un premier enroulement (T4N1) dudit second transformateur de commande est connecté entre le drain dudit second transistor de commutation (M2) et l'autre extrémité dudit second enroulement secondaire (T1N3),
- un deuxième enroulement (T3N3) du premier transformateur de commande (T3) est connecté au circuit de commande de premier transistor de commutation (1), et
- un deuxième enroulement (T4N3) dudit second transformateur de commande (T4) est connecté au circuit de commande de second transistor de commutation (1),
- un troisième enroulement (T3N2) dudit premier transformateur de commande est connecté entre l'autre extrémité dudit second enroulement secondaire (T1N3) et le drain dudit second transistor de commutation (M2), et
- un troisième enroulement (T4N1) dudit second transformateur de commande (T4) est connecté entre l'autre extrémité dudit premier enroulement secondaire (T1N2) et le drain dudit premier transistor de commutation (M1).

2. Source de puissance selon la revendication 1, **caractérisée en ce que** ladite première sortie de la source de puissance est la sortie positive de la source de puissance, **en ce que** ladite seconde sortie de la source de puissance est la sortie du potentiel de masse de la source de puissance et **en ce que** lesdits transistors de commutation (M1, M2) sont des transistors de commutation de type n (M1, M2).

3. Source de puissance selon la revendication 1, **caractérisée en ce que** la première sortie de la source de puissance est la sortie négative de la source de puissance, **en ce que** la seconde sortie de la source de puissance est la sortie du potentiel de masse de la source de puissance et **en ce que** lesdits transistors de commutation (M1, M2) sont des transistors de commutation de type p (M1, M2).

4. Source de puissance selon la revendication 1, **caractérisée en ce que** ledit transistor de commutation (M1, M2) est un transistor MOSFET.
